# DEMANDE DE BREVET EUROPEEN

(11) **EP 1 914 862 A1**
(43) Date de publication de la demande: **23.04.2008**
(21) Numéro de dépôt: 07291280.1
(22) Date de dépôt: 22.10.2007
(51) Int. Cl.: H02K 1/16, H02K 1/26, H02K 17/16

(54) **Carcasse de rotor ou stator d'un moteur électrique**

(30) Priorité: 20.10.2006 FR 0609241
(71) Demandeur: Converteam Motors SA, 54250 Champigneulles (FR)
(72) Inventeur: Galmiche, Christophe, 54200 Toul (FR)
(74) Mandataire: Blot, Philippe Robert Emile

(57) **Abrégé**

L'élément (10) de machine électrique tournante comporte :
- un corps cylindrique (12),
- pourvu à sa périphérie d'encoches longitudinales (24) s'ouvrant sur la surface périphérique cylindrique du corps (12) par des ouvertures d'encoche (28),
- lesquelles ouvertures d'encoche (28) sont réparties angulairement autour de l'axe du corps suivant des écarts angulaires mesurés (mesurés ?) suivant des sections orthogonales transversales,
- des conducteurs (16) logés dans les encoches (24) et formant au moins un bobinage (14).

Suivant une même section transversale orthogonale, le corps (12) comporte au moins deux paires d'ouvertures d'encoche (28), ces ouvertures d'encoche étant successives et adjacentes, les ouvertures d'encoche (28) de ces deux paires d'encoches étant décalées de deux écarts angulaires distincts.

## Description

La présente invention concerne un élément de machine électrique tournante comportant :
- un corps cylindrique,
- pourvu à sa périphérie d'encoches longitudinales s'ouvrant sur la surface périphérique cylindrique du corps par des ouvertures d'encoche,
- lesquelles ouvertures d'encoche sont réparties angulairement autour de l'axe du corps suivant des écarts angulaires mesurés suivant des sections orthogonales transversales,
- des conducteurs logés dans les encoches et formant au moins un bobinage,
notamment de moteur électrique asynchrone. Elle porte également sur un moteur électrique asynchrone comportant un rotor et/ou un stator selon l'invention.

Les rotors de moteurs électriques asynchrones sont constitués de conducteurs électriques disposés en « cage d'écureuil », c'est-à-dire selon les génératrices d'un cylindre et connectés entre eux depuis leurs extrémités. Le rotor est entraîné en rotation par un champ magnétique tournant engendré par un stator.

Pour des raisons d'efficacité magnétique, les conducteurs électriques du rotor sont généralement logés dans des encoches prévues dans un corps métallique de diamètre légèrement supérieur à celui de la « cage d'écureuil ». Ces encoches s'ouvrent sur la surface cylindrique extérieure du rotor par des ouvertures d'encoche de largeur plus faible que celles des encoches. Ces ouvertures d'encoche sont régulièrement réparties angulairement autour de sections du corps métallique.

En pratique, ces sections sont généralement constituées de plaques métalliques qui sont empilées et serrées les unes contre les autres de façon à éviter des pertes par le biais de courant de Foucault qui seraient engendrés dans le corps métallique. Il en résulte que les ouvertures d'encoche constituent des lignes droites selon des génératrices du rotor et réparties régulièrement à sa surface.

Pour les mêmes raisons d'efficacité magnétique, le stator est fabriqué selon les mêmes dispositions constructives, notamment avec des conducteurs électriques logés dans des encoches. Ces encoches communiquent avec la surface interne du stator par le biais d'ouvertures d'encoche, ces ouvertures d'encoche constituant des lignes droites réparties régulièrement sur la surface cylindrique interne du stator.

Ainsi, lorsque le rotor tourne à l'intérieur du stator, les lignes constituées par les ouvertures d'encoche à la surface du rotor et du stator viennent en regard l'une de l'autre et à une fréquence qui est fonction de la vitesse de rotation du rotor et du nombre de lignes sur les surfaces du rotor et du stator. Ce croisement périodique est source de bruit d'origine magnétique, aérodynamique et de vibration désigné dans la suite par l'expression générique bruit.

Pour réduire ce bruit et étaler son spectre, il est connu de décaler l'ouverture d'encoche de chaque section par rapport à celle de la section adjacente d'une valeur angulaire constante, de façon à constituer des lignes hélicoïdales à la surface du rotor ou du stator au lieu de lignes droites. Cette disposition permet de réduire le bruit engendré par le moteur électrique en fonctionnement. Cependant il subsiste un bruit. Par ailleurs, l'inclinaison hélicoïdale des encoches n'est pas toujours possible.

Le but de la présente invention est de réduire encore le bruit généré par la machine tournante du fait de la présence des ouvertures d'encoche.

A cet effet, l'invention a pour objet un élément de machine électrique tournante comportant :
- un corps cylindrique,
- pourvu à sa périphérie d'encoches longitudinales s'ouvrant sur la surface périphérique cylindrique du corps par des ouvertures d'encoche,
- lesquelles ouvertures d'encoche sont réparties angulairement autour de l'axe du corps suivant des écarts angulaires mesurés suivant des sections orthogonales transversales,
- des conducteurs logés dans les encoches et formant au moins un bobinage,
caractérisé en ce que, suivant une même section transversale orthogonale, le corps comporte au moins deux paires d'ouvertures d'encoche, ces ouvertures d'encoche étant successives et adjacentes, les ouvertures d'encoche de ces deux paires d'encoches étant décalées de deux écarts angulaires distincts.

De cette façon, on créé une irrégularité dans la disposition des ouvertures d'encoche à la surface du rotor et/ou du stator.

Selon d'autres caractéristiques de l'invention :
- le nombre d'écarts angulaires distincts entre deux ouvertures d'encoche adjacentes est inférieur à la moitié du nombre d'ouvertures d'encoche sur une section ;
- l'écart angulaire entre deux ouvertures d'encoche adjacentes prend entre 3 et 9 valeurs distinctes ;
- les motifs constitués par la répartition des ouvertures d'encoche sur deux sections adjacentes du corps cylindrique sont distincts ;
- chaque ouverture d'encoche prend la forme d'un passage qui s'étend entre l'encoche correspondante et la surface périphérique cylindrique du corps et dont la largeur est inférieure à la largeur de l'encoche ; et
- toutes les ouvertures d'encoche ont une largeur identique.

L'invention a également pour objet un moteur électrique comprenant au moins l'un parmi un rotor tel que décrit ci-dessus et un stator tel que décrit ci-dessus.

L'invention sera mieux comprise à la lecture de la description qui va suivre, donnée uniquement à titre d'exemple et faite en se référant aux dessins sur lesquels :
- la Figure 1 est une vue en perspective et en coupe d'un rotor de moteur électrique selon l'invention ;
- la Figure 2 est une vue identique à celle de la Figure 1 d'une variante de réalisation d'un rotor selon l'invention.

Les moteurs asynchrones sont bien connus dans le milieu industriel. Ils sont alimentés par des courants électriques polyphasés.

Le stator non représenté est formé d'un corps métallique feuilleté comportant des enroulements propres à engendrer un champ tournant dans l'espace délimité.

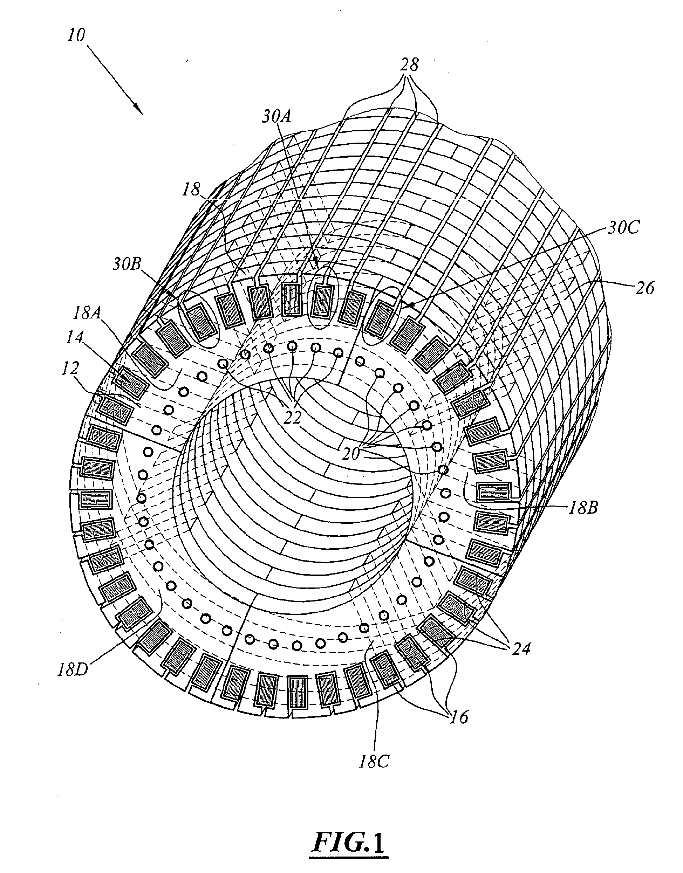

Le moteur comporte un rotor 10 représenté sur la figure 1 disposé à l'intérieur du stator. Le rotor 10 comporte un corps métallique 12 et un enroulement rotorique 14 refermé sur lui-même formant une cage d'écureuil.

Plus précisément, l'enroulement rotorique 14 comporte un ensemble de conducteurs 16 s'étendant généralement suivant des génératrices du rotor parallèlement les uns aux autres. Ces conducteurs 16 sont constitués de barres de cuivre généralement de section rectangulaire. Elles sont reliées ensemble à chacune de leurs extrémités par deux couronnes conductrices non représentées.

Le corps 12 du rotor est formé d'un empilage de fines tôles métalliques 18 isolées les unes des autres pour éviter la circulation de courant de Foucault.

Chaque tôle 18 constituant une section du rotor est formée par exemple de quatre secteurs s'étendant sur 90° et formant chacun un secteur de couronne 18A, 188, 18C, 18D.

Ces secteurs sont tous identiques.

Ces secteurs sont traversés par des orifices 20 régulièrement répartis dans lesquels sont disposés des tirants 22 permettant de comprimer les secteurs de couronne les uns aux autres suivant l'axe du rotor, et ainsi assurer l'assemblage du corps.

Les secteurs de couronne 18A, 18B, 18C, 18D sont empilés avec un recouvrement de sorte que les secteurs de deux sections adjacentes se chevauchent partiellement. Par exemple, chaque secteur d'une section recouvre les deux moitiés adjacentes de deux secteurs voisins de la section suivante.

Comme connu en soi, le corps 12 comporte à sa périphérie des encoches 24 dans lesquelles sont logés les conducteurs longitudinaux 16 de l'enroulement rotorique. Ces encoches 24 sont équi-réparties angulairement, c'est-à-dire qu'elles ont toutes la même section et qu'elles sont toutes séparées angulairement les unes des autres d'un même écartement angulaire.

Ces encoches 24 s'ouvrent à la surface périphérique notée 26 du corps cylindrique 12 par des ouvertures d'encoche 28. Ces ouvertures d'encoche ont une section généralement constante depuis la surface périphérique du corps jusqu'à l'encoche dans laquelle elle débouche. Ces sections sont toutes identiques d'une ouverture d'encoche à l'autre. Les sections des ouvertures d'encoche 28 sont inférieures aux sections correspondantes des encoches 24 de sorte que les conducteurs 16 se trouvent retenus dans les encoches.

Chaque ouverture d'encoche 28 prend la forme d'un passage qui s'étend entre l'encoche 24 correspondante et la surface périphérique cylindrique 26 du corps 12 et dont la largeur est inférieure à la largeur de l'encoche 24.

Selon l'invention, pour une section déterminée du corps, les écarts angulaires entre les ouvertures d'encoche 28 successives sont distincts d'une paire d'ouvertures d'encoche à l'autre. Plus généralement, suivant une même section transversale orthogonale, le corps 12 comporte au moins deux paires d'ouvertures d'encoche 28, ces ouvertures d'encoche étant successives et adjacentes, les ouvertures d'encoche 28 de ces deux paires d'encoches étant décalées de deux écarts angulaires distincts.

A cet effet, pour une section donnée, les ouvertures d'encoche 28 des différentes encoches sont positionnées par rapport à l'encoche associée par exemple suivant trois positions relatives distinctes. Ces positions sont une première position centrée par rapport à l'axe de l'encoche, comme en 30A, une seconde position déportée vers la gauche par rapport à l'axe de l'encoche, comme en 30B, et une troisième position décalée vers la droite par rapport à l'axe de l'encoche, comme en 30C. Les positions relatives des ouvertures d'encoche pour chaque encoche sont définies aléatoirement ou pseudo-aléatoirement suivant la périphérie du rotor.

De préférence, l'écart angulaire entre deux ouvertures d'encoche 28 adjacentes prend entre trois et neuf valeurs distinctes, la valeur moyenne de l'écart angulaire étant égale à l'écart angulaire entre les deux encoches adjacentes correspondantes. Le nombre d'écarts angulaires distincts entre deux ouvertures d'encoche 28 adjacentes est inférieur à la moitié du nombre d'ouvertures d'encoche 28 sur une section.

Suivant un premier mode de réalisation illustré sur la Figure 1, toutes les sections successives du rotor en ce qui concerne la position des ouvertures d'encoche, sont identiques de sorte que les ouvertures d'encoche forment des lignes droites s'étendant suivant des génératrices du cylindre parallèlement à l'axe de rotation du rotor. Ces lignes sont séparées sur la surface périphérique du rotor par des écarts aléatoires ou pseudo aléatoires. En particulier, au moins deux paires de lignes formées par les ouvertures d'encoche ont des écarts angulaires distincts.

On comprend qu'avec un tel agencement irrégulier des ouvertures d'encoche à la surface du rotor, les bruits engendrés par les ouvertures d'encoche lors de leur passage en vis-à-vis des ouvertures d'encoche correspondantes du stator ont des fréquences différentes qui s'additionnent les unes aux autres de sorte que le spectre de fréquence de vibration totale du moteur est étalé, réduisant ainsi le bruit et les vibrations occasionnés à certaines fréquences particulières.

Afin de simplifier la fabrication et permettre que tous les secteurs de couronnes soient identiques, chaque secteur présente successivement suivant sa périphérie deux fois le même motif irrégulier constitué par une même succession d'ouvertures d'encoche irrégulièrement réparties.

Suivant un mode particulier de réalisation, seules les ouvertures d'encoche du rotor sont non équi-réparties angulairement.

Suivant un autre mode de réalisation, le stator comporte également des ouvertures d'encoche non équi-réparties angulairement dans lesquelles sont disposés les bobinages d'alimentation polyphasés.

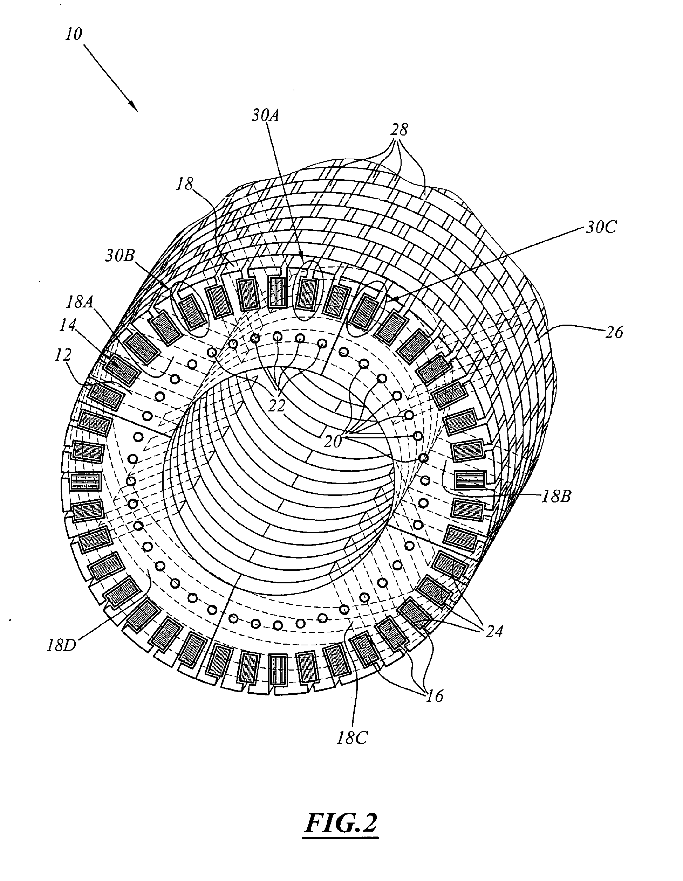

Suivant encore un mode de réalisation, illustré sur la Figure 2, les ouvertures d'encoche d'une section à l'autre du rotor sont distinctes, de sorte que les ouvertures d'encoche ne sont pas alignées suivant l'axe longitudinal du rotor.

Ainsi, les motifs constitués par la répartition des ouvertures d'encoche sur deux sections adjacentes du corps cylindrique sont distincts.

Cette répartition particulière contribue à améliorer l'étalement du spectre de fréquence de vibration.

## Revendications

1. Elément (10) de machine électrique tournante comportant :
- un corps cylindrique (12),
- pourvu à sa périphérie d'encoches longitudinales (24) s'ouvrant sur la surface périphérique cylindrique du corps (12) par des ouvertures d'encoche (28),
- lesquelles ouvertures d'encoche (28) sont réparties angulairement autour de l'axe du corps suivant des écarts angulaires mesurés suivant des sections orthogonales transversales,
- des conducteurs (16) logés dans les encoches (24) et formant au moins un bobinage (14),
**caractérisé en ce que**, suivant une même section transversale orthogonale, le corps (12) comporte au moins deux paires d'ouvertures d'encoche (28), ces ouvertures d'encoche étant successives et adjacentes, les ouvertures d'encoche (28) de ces deux paires d'encoches étant décalées de deux écarts angulaires distincts.

2. Elément de machine électrique tournante selon la revendication 1, **caractérisé en ce que** le nombre d'écarts angulaires distincts entre deux ouvertures d'encoche (28) adjacentes est inférieur à la moitié du nombre d'ouvertures d'encoche (28) sur une section.

3. Elément de machine électrique tournante selon la revendication 1 ou 2, **caractérisé en ce que** l'écart angulaire entre deux ouvertures d'encoche (28) adjacentes prend entre 3 et 9 valeurs distinctes.

4. Elément de machine électrique tournante selon l'une quelconque des revendications précédentes, **caractérisé en ce que** les motifs constitués par la répartition des ouvertures d'encoche (28) sur deux sections adjacentes du corps cylindrique (12) sont distincts.

5. Elément de moteur électrique selon l'une quelconque des revendications précédentes, **caractérisé en ce que** chaque ouverture d'encoche (28) prend la forme d'un passage qui s'étend entre l'encoche (24) correspondante et la surface périphérique cylindrique (26) du corps (12) et dont la largeur est inférieure à la largeur de l'encoche (24).

6. Elément de moteur électrique selon l'une quelconque des revendications précédentes, **caractérisé en ce que** toutes les ouvertures d'encoche (28) ont une largeur identique.

7. Moteur électrique comprenant au moins l'un parmi un rotor selon l'une quelconque des revendications 1 à 6 et un stator selon l'une quelconque des revendications 1 à 6.
